(19)

Europäisches
Patentamt
European
Patent Office
Office européen
des brevets

(11) **EP 2 429 169 A1**

(12) **EUROPEAN PATENT APPLICATION**

(43) Date of publication:
**14.03.2012  Bulletin 2012/11**

(51) Int Cl.:
*H04N 1/40* *(2006.01)*

(21) Application number: **11180509.9**

(22) Date of filing: **08.09.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Iwamoto, Takara**<br>**Tokyo, Tokyo 108-8551 (JP)** |
| | (74) Representative: **Piotrowicz, Pawel Jan Andrzej et al**<br>**Venner Shipley LLP**<br>**200 Aldersgate**<br>**London EC1A 4HD (GB)** |
| (30) Priority: **10.09.2010  JP 2010203015** | |
| (71) Applicant: **Oki Data Corporation**<br>**Tokyo 108-8551 (JP)** | |

(54)  **Image processing apparatus and image forming system**

(57)     An image processing apparatus processes an image. An image obtaining section (51) receives a color image. A region extracting section (52) extracts a character region from the color image. A character color determining section (53) determines whether the characters in the extracted character region have a non-highlight color or a different color from the non-highlight color. A highlighting section (54) performs a highlight process on the characters if the characters have a color different from the non-highlight color. A de-highlighting section (55) performs a de-highlight process on the characters if the characters have the non-highlight color. An image generating section (56) produces a color-reduced image in which a number of colors has been reduced as a result of either the highlight process or the de-highlight process performed on extracted character region. A transmitting section (56a) transmits the color-reduced image to an external apparatus.

FIG.2

**EP 2 429 169 A1**

**Description**

**BACKGROUND OF THE INVENTION**

**FIELD OF THE INVENTION**

The present invention relates to an image processing apparatus for processing image data that should be printed and an image forming system that incorporates the image processing apparatus.

**DESCRIPTION OF THE RELATED ART**

A monochrome image or binary image is sometimes printed using color image data. A problem with printing such a monochrome image or a binary image is that the print density of characters highlighted in color tends to be lower, and therefore the characters are not noticeable. One known image processing apparatus is capable of processing characters highlighted in color so that the originally color-highlighted characters remain noticeable even in a monochrome printout.

This type of image processing apparatus usually includes a color image scanner, a region-isolating section, a color-determining section, a highlighting section, and a print engine. The color image scanner reads the image of an original document. The region-isolating section identifies areas of an image read from an original document, and isolates character areas from image areas such as photographs. A color-determining section determines whether the characters are colored characters or monochrome characters. The highlighting section adds, for example, underlines to the characters highlighted in color, or makes the characters highlighted in bold. The print engine then prints the print data in a monochrome image, the characters originally highlighted in color remaining highlighted in the monochrome image.

However, the conventional image processing apparatus suffers from a problem in that if original colored characters undergo a highlight process in a binary image, the previously highlighted characters tend to consume more developer material than de-highlighted characters.

**SUMMARY OF THE INVENTION**

An object of the invention is to provide an image processing apparatus and an image forming system, capable of printing a monochrome image or a binary image so that the originally color-highlighted characters remain highlighted but consume as much developer material as the de-highlighted characters.

An image processing apparatus processes an image. An image obtaining section (51) is configured to receive a color image. A region extracting section (52) is configured to extract a character region from the color image. A character color determining section (53) is configured to determine whether the characters in the extracted character region have a non-highlight color or a color different from the non-highlight color. A highlighting section (54) is configured to perform a highlight process on the characters in the extracted character region if the character color determining section (53) determines that the characters in the extracted character region have a color different from the non-highlight color. A de-highlighting section (55) is configured to perform a de-highlight process on the characters in the extracted character region if the character color determining section (53) determines that the characters in the extracted character region have the non-highlight color. An image generating section (56) is configured to produce a color-reduced image in which a number of colors has been reduced as a result of either the highlight process or the de-highlight process performed on extracted character region. A transmitting section (56a) is configured to transmit the color-reduced image to an external apparatus.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

**BRIEF DESCRIPTION OF THE DRAWINGS**

The present invention will become more fully understood from the detailed description given hereinbelow and the accompanying drawings which are given by way of illustration only, and thus are not limiting the present invention, and wherein:

Fig. 1 illustrates the outline of an image processing apparatus according to a first embodiment;
Fig. 2 is a functional block diagram illustrating the outline of the image processing apparatus shown in Fig. 1;
Fig. 3 is a flowchart illustrating the operation of the image processing apparatus shown in Figs. 1 and 2;

Figs. 4A and 4B illustrate the highlight process and the de-highlight process shown in Fig. 3;

Fig. 5 is a function diagram illustrating the outline of an image processing apparatus according to a second embodiment;

Fig. 6 illustrates is a table that lists combinations of the values of L, a, and b of a color specified by a user;

Fig. 7 is a flowchart illustrating the operation of the image processing apparatus shown in Fig. 5; and

Fig. 8 illustrates an exemplary configuration of an image forming system according to the invention.

## DETAILED DESCRIPTION OF THE INVENTION

### First Embodiment

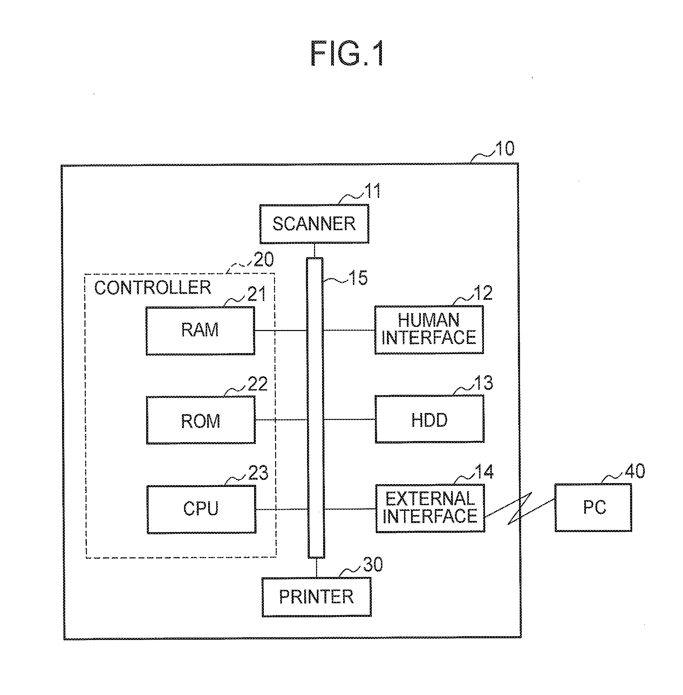

Fig. 1 illustrates the outline of an image processing apparatus 10 according to a first embodiment.

The image processing apparatus 10 takes the form of a digital color multi-function peripheral. A controller 20 performs overall control of the image processing apparatus 10. An image reading section 11 (e.g., scanner) reads the image of an original document, and produces image data. A human interface 12 displays messages to the user, and receives commands from the user. A hard disk drive (HDD) 13 is an auxiliary storage device. An external interface 14 communicates image data and commands with an external personal computer or PC 40. A printer 30 prints an image on a recording medium (e.g., paper) in accordance with image data. The controller 20 communicates with the scanner 11, human interface 12, HDD 13, external interface 14, and printer 30 via a bus line 15.

The controller 20 includes a random access memory (RAM) 21, a read only memory (ROM) 22, and a central processing unit (CPU) 23. The controller 20 reads an image processing program from the ROM 23, and stores it into the RAM 21. The controller 20 then executes the program to process an image read from the original document, and stores the processed image into the RAM 21 temporarily.

The scanner 11 includes a platen, an automatic document feeder (ADF), a light source, a light receiving element, and a signal processing section (not shown). The original document is placed on the platen and is then irradiated with light. Alternatively, the original document is transported by the ADF while being irradiated with light. The light reflected back from the original document is received in the light deceiving element, which in turn converts the light into an image signal. The scanner 11 includes a signal processing section that performs signal processing (e.g., A/D conversion) on the image signal, and generates image data in the form of R, G, and B signals.

The RGB color model is an additive color model in which red, green, and blue light are added together in various ways to reproduce a broad array of colors. The name RGB of the model comes from the initials of the three additive primary colors: red, green, and blue.

The human interface 12 includes a ten key pad, a selection key, a start-to-read key, a liquid crystal display, and a touch screen (not shown). The user operates appropriate keys to initiate or interrupt the reading of the image of an original document, select a desired one of a variety of settings, and display menus and messages received from the controller 20.

The HDD 13 is a non-volatile memory device into which data can be written or from which data can be read. The HDD 13 stores the image data and a variety of settings.

The external interface (I/F) 14 is a USB interface or a network interface. The image processing apparatus 10 communicates with the PC 40 via the external interface 14.

The printer 30 is, for example, an electrophotographic page printer, and converts the RGB image data received from the PC into CMYK data that can be expressed by toners. The printer 30 then prints toner images on the recording medium.

The CMYK color model is a subtractive color model, used in color printing. CMYK refers to the four developer materials: cyan, magenta, yellow, and black. A scanned color image is in the RGB space while a printer's output is in the CMYK space. Thus, the scanned color image in the RGB space must be converted into image data in the CMYK space before printing.

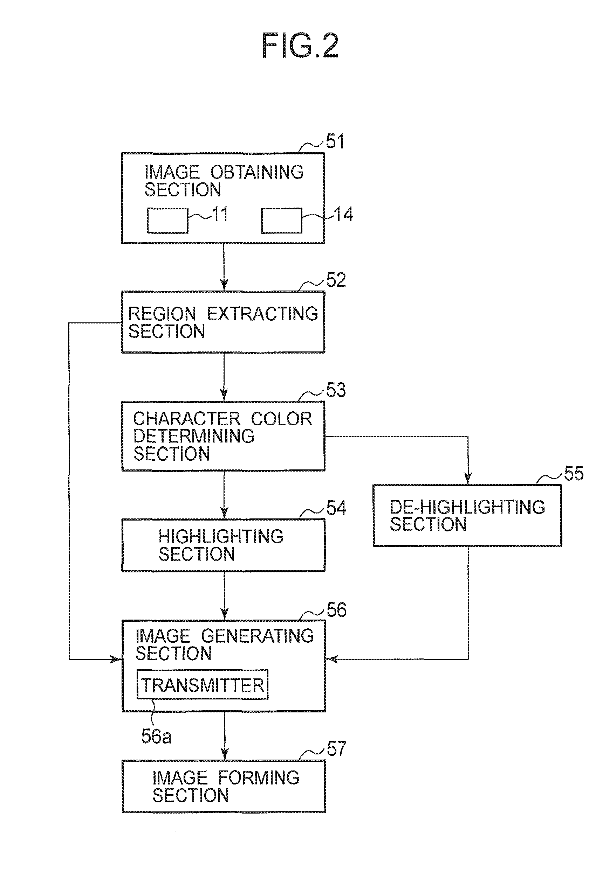

Fig. 2 is a functional block diagram illustrating the outline of the image processing apparatus 10 shown in Fig. 1.

An image obtaining section 51 obtains a color image from an original document. A region extracting section 52 extracts a character region from the obtained color image. A character color determining section 53 determines based on the character color in the extracted character region whether the character color is a non-highlight color or a highlight color. A highlighting section 54 carries out a highlight process for de-highlighting a character region that has been determined to have a highlight color. A de-highlighting section 55 carries out a de-highlight process for not highlighting a character region that has been determined to have a non-highlight color. An image generating section 56 generates a color reduced image having a smaller number of colors than the image of the original document, the color reduced image being produced based on the results of the de-highlight process or highlight process of the image data. A transmitting section 56a transmits the produced color reduced image to an external apparatus (not shown).

The controller 20 reads the image processing program from the ROM 23, and executes the program to control the operation of the image obtaining section 51, region extracting section 52, character color determining section 53, highlighting section 54, de-highlighting section 55, image generating section 56, and transmitting section 56a.

The image obtaining section 51 includes the scanner 11 and the external interface 14. The image obtaining section 51 drives the scanner 11 to obtain the image data in RGB space by scanning the original document, or receive image data in the RGB space from the PC 40 through the external interface 14.

The image obtaining section 51 performs a variety of image processing operations on the obtained image data in the RGB space, and then stores the corrected image data into the RAM 21. Such image processing operations include shading correction and halftone correction.

Using a known method, the region extracting section 52 separates the image data in the RGB model stored in the RAM 21 into a character region and an image (e.g., photograph) region. The region extracting section 52 sends a plurality of character regions separated from the image data to the character color determining section 53, and the image regions to the image generating section 56.

The character color determining section 53 checks the R, G, and B values of the plurality of character regions to determine whether the characters in the extracted character regions have the non-highlight color or the highlight color. The term non-highlight color covers a color used as a main color, for example, black in the image. The term highlight color covers a color except for the main color, and is, for example, red indicating that the character is important. If the non-highlight color and highlight color are both present in a character region, the character color determining section 53 separates the character region into a non-highlight color character region and a highlight color character region.

If the character color determining section 53 determines that the characters are in the highlight color, the highlighting section 54 performs the highlight process on the characters to make the characters stand out relative to remaining characters. The characters are highlighted by a higher density, a bolded font, a larger font size, an underline, or italics.

If the character color determining section 53 determines that the characters are in a non-highlight color, the de-highlighting section 55 carries out the de-highlight process on the characters. The de-highlight process is carried out to make non-highlight color characters less noticeable compared to the highlighted characters while maintaining the non-highlight color characters still readable. The characters may be made less noticeable by decreasing the density of characters, converting the characters to a standard format, or reducing the size of characters. Performing the de-highlight process on the non-highlight color characters helps the highlighted characters more noticeable or stand out relative to the de-highlighted characters.

The image generating section 56 produce the color reduced image (e.g., monochrome image) by combining three items of image data: (1) image data in an image region extracted by the region extracting section 52, (2) image data in a character region having the highlight color on which the highlight process has been carried out by the highlighting section 54, and (3) image data in a character region having the non-highlight color on which the de-highlight process has been performed.

The image generating section 56 includes the transmitting section 56a, which transmits the color reduced image to an image forming section 57.

The image forming section 57 takes the form of a printer 30, which prints the toner image of a color-reduced image on a print medium, the color-reduced image being produced by the image generating section 56.

**{Operation of First Embodiment}**

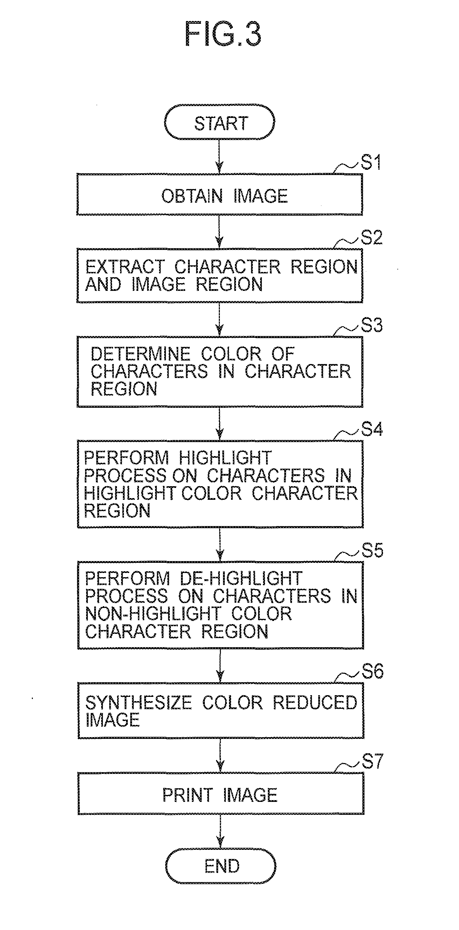

Fig. 3 is a flowchart illustrating the operation of the image processing apparatus 10 shown in Figs. 1 and 2.

At S1, the image obtaining section 51 reads the image of an original document by means of the scanner 11, and obtains image data in the RGB space. At S2, using a known method, the region extracting section 52 extracts a character region and an image region, separately, from the image data in the RGB space obtained at S1.

Known methods for separating the image data into a character region and an image region are capable of performing the following processes. Characters contain vertical and lateral strokes that cross vertically or laterally. Two pixels are 4-connected if their positional relation is such that a second pixel is positioned adjacent to a first pixel to the immediate left, right, top or bottom of the first pixel. In contrast, an image has halftones and therefore black pixels may often be scattered in all directions . Making use of this fact, if the number of 4-connected pixels in an area of, for example, 5X5 pixels is equal to or greater than a predetermined value, then it is determined that the pixel is a part of a character. If the number of 4-connected pixels in an area of 5X5 pixels is smaller than the predetermined value, then it is determined that the pixel is a part of an image and not of a character.

At S3, the character color determining section 53 refers to the RGB values extracted at S2, and determines whether the detected characters in the detected character region are in the non-highlight color or the highlight color. A description will be given of black characters as the non-highlight color.

In this specification, color space conversion is performed to convert RGB values into CIEL*a*b* values. If the lightness L of a color is not larger than a threshold Lth, i.e., $L \leq Lth$ and the saturation $C = (a^2 + b^2)^{1/2}$ of the color is not larger than a threshold Cth, i.e., C≦Cth, then the characters are in a non-highlight color. If the lightness L is greater than the threshold Lth and/or the saturation C is greater than Cth, then the characters are in a highlight color.

Commission Internationale de l'Éclairage (usually abbreviated CIE) has developed and proposed a variety of color spaces including the XYZ color model that describes a color space. CIEL*a*b* is a uniform color space proposed in 1976, and has been designed based on human perception.

At step S4, the highlighting section 54 carries out the highlight process for highlighting a character region that has been determined to have a highlight color. For example, the characters in the region are converted into a high density value DH through density conversion. Other processes, e.g., bolding, increasing character size, underlining, or italicizing may be performed on the characters instead of density conversion. Two or more types of processes may be combined, for example, bolding and increasing the character size.

At step S5, the de-highlighting section 55 carries out the de-highlight process for de-highlighting a character region that has been determined to have a non-highlight color. For example, density conversion is performed on the characters to convert the density of the characters into a low density value DL (DL < DH). Alternatively, the characters may be de-highlighted by a narrowing process or a size reducing process. In other words, the alternative processes may not necessarily be opposite to the highlight process. For example, the characters may be de-highlighted by the de-highlight process in which the narrowing process is carried out, rather than by the highlight process in which the density is increased. Moreover, these de-highlight processes may be a combination of two or more de-highlight processes, e.g., the characters are first narrowed and is then reduced in size.

At step S6, the image generating section 56 synthesizes color reduced image from the data in the image region extracted at S2 and the data in the character region that has been subjected to the de-highlight process at step S5 or highlight process at S4. For example, the resulting color reduced image is a monochrome image data. This monochrome image data contains (1) an image in which image data in the RGB space in the image region has been converted to have a high density D (0≦D≦255) given by an equation (1) below, (2) a highlight color region in which the density of characters is DH due to the highlight process, and (3) a non-highlight color region in which the character density has been converted to DL as a result of the de-highlight process.

$$D = 255 - (0.299 \times R + 0.587 \times G + 0.114 \times B) \quad \ldots \text{Eq.(1)}$$

The transmitting section 56a transmits the thus produced color reduced image data to the image forming section 57. At step S7, the image forming section 57 receives the color reduced image data synthesized at S6, and the printer 30 prints the image on the recording medium using color toners having corresponding colors.

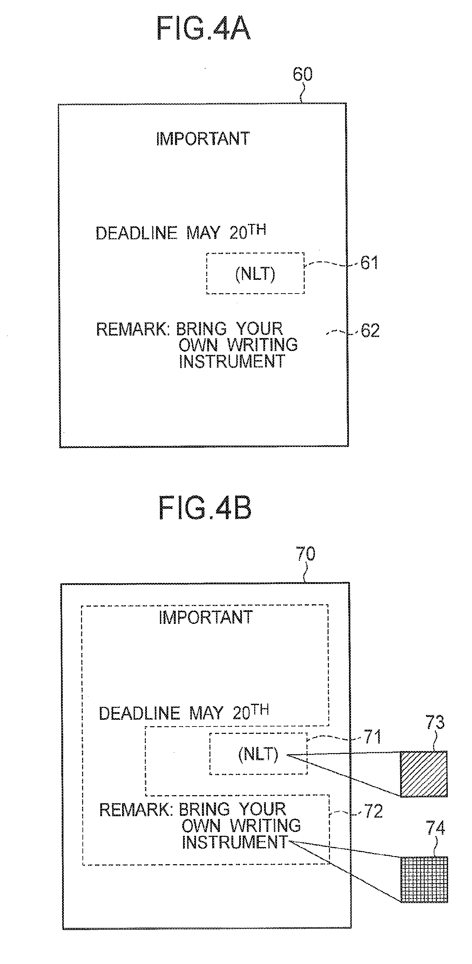

Figs. 4A and 4B illustrate the highlight process and de-highlight process shown in Fig. 3. Fig. 4A illustrates an exemplary image data 60 in the RGB space read by the scanner 11. "NLT (no later than)" shown in Fig. 4 is a character region in a highlight color (red) region 61. The remainder is a character region of a non-highlight color region 62. Fig. 4B illustrates an exemplary reduced color image data 70 generated by the image generating section 56 which performs the highlight process and de-highlight process on the image data 60.

The characters in the highlight color region 61 (Fig. 4A) are highlighted, so that the characters are now high density characters 71 (Fig. 4B) having a high density (e.g., DH=255). The characters in the non-highlight color region 62 (Fig. 4A) are subjected to the de-highlight process, so that the characters are now low density characters 72 (Fig. 4B) having a lower density (e.g., DL=128) than the high density characters 71.

The high density characters 71 are printed at a 100% duty as depicted by 73. The low density characters 72 are printed as a halftone image as depicted at 74.

In general, characters having a non-highlight color are much larger in number than those having a highlight color, and therefore occupy a larger print area. Thus, a reduction of the amount of toner consumed in printing de-highlighted characters is more significant than an increase of the amount of toner consumed in printing highlighted characters, so that overall toner consumption may be reduced.

**{Effects of first Embodiment}**

The image processing apparatus 10 according to the first embodiment incorporates the highlighting section 54 and de-highlighting section 55. Thus, a color image may be converted into a color reduced image, while maintaining the readability of the colored characters and saving toner consumption.

**Second Embodiment**

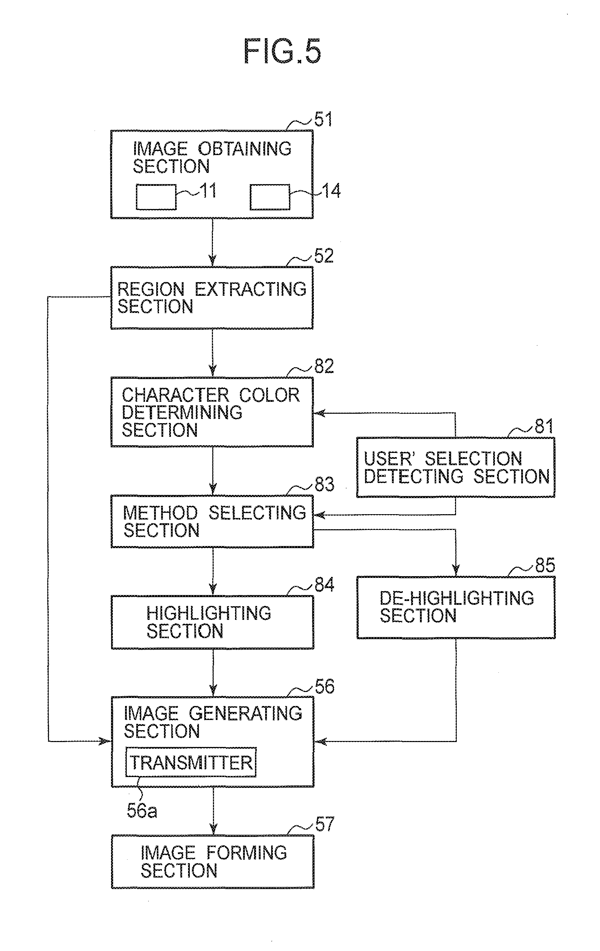

Fig. 5 is a function diagram illustrating the outline of an image processing apparatus 10 according to a second embodiment.

The image processing apparatus 10 incorporates an image obtaining section 51, a region extracting section 52, an image forming section 56, and an image forming section 57, which are substantially the same as those of the first embodiment. The image processing apparatus 10 also incorporates a user's selection detecting section 81, a character color determining section 82, a method selecting section 83, a highlighting section 84, and a de-highlighting section 85. The second embodiment differs from the first embodiment in that the user's selection detecting section 81 and the method selecting section 83 are employed.

The user's selection detecting section 81 is configured to receive the selection of non-highlight color, highlight color, highlight process, and de-highlight process from the user. The colors and highlight/de-highlight processes are stored in either an RAM 21 or an HDD 13.

The character color determining section 82 checks the RGB values of the characters in the character region extracted by the region extracting section 52 to determine whether the color of the characters is the non-highlight color, highlight color, or other color.

The highlighting section 84 is configured to select between the de-highlight process for the non-highlight color and the highlight process for the highlight color.

The highlighting section 84 performs the highlight process on the characters in the character region that has been identified as containing the highlighted characters. The highlight process is carried out by executing the highlight process selected by the method selecting section 83.

Using the method selected by the method selecting section 83, the de-highlighting section 85 performs the de-highlight process on the characters in the character region whose characters have been identified as being in a non-highlight color.

**{Operation of Second Embodiment}**

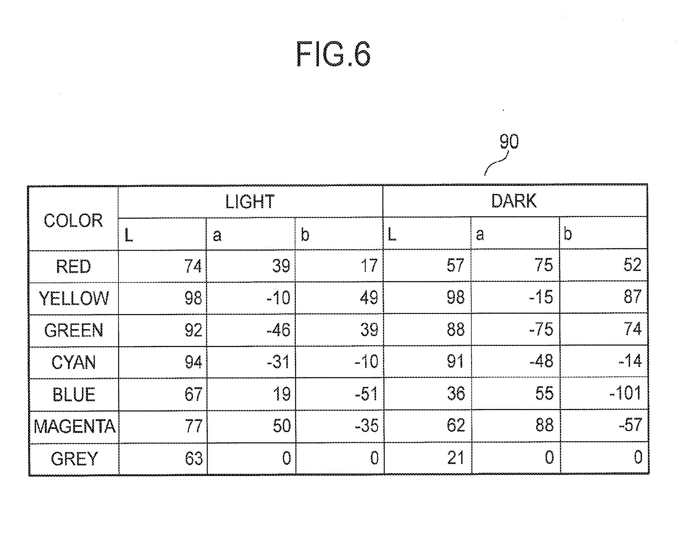

Fig. 6 illustrates is a table 90 that lists combinations of the values of L, "a," and "b" of a color specified by the user, received through the user's selection detecting section 81 shown in Fig. 5. Each of seven colors, i.e., red, yellow, green, cyan, blue, magenta, and grey is divided into two groups: dark color and light colors. Each group includes L values, "a" values, and "b" values.

The table 90 lists the combinations of L value, "a" value, and "b" value for each color. The table 90 is stored in the HDD 13, and enables the user to select the non-highlight color and highlight color.

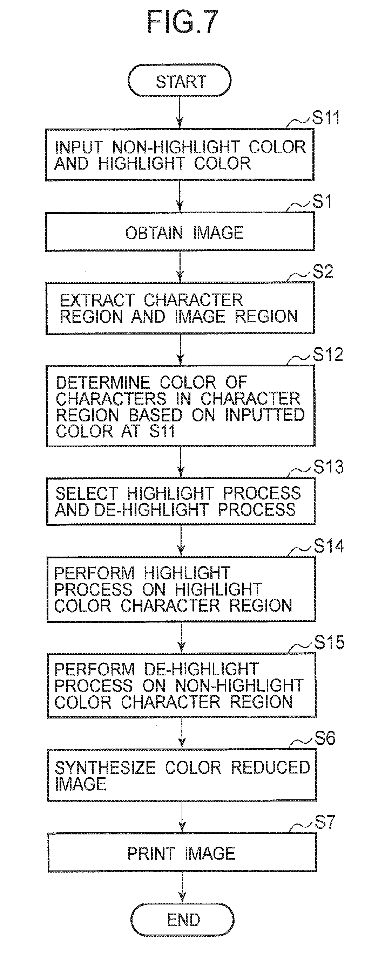

Fig. 7 is a flowchart illustrating the operation of the image processing apparatus 10 shown in, Fig. 5.

At step S11, the user's selection detecting section 81 prompts the user to input the non-highlight color for the characters in an original document if they are not to be highlighted, and the highlight color for characters if they are to be highlighted. Thus, the user specifies the non-highlight color and the highlight color. The user's selection detecting section 81 stores the non-highlight color and the highlight color specified by the user into the RAM 21 or HDD 13.

Specifically, the user specifies the non-highlight color and highlight color as follows: The user's selection detecting section 81 displays a message "Please select the color for characters not to be highlighted from the following colors" on the liquid display of a human interface 12. Fourteen colors to be selected are displayed in the shape of colored buttons: seven colors (red, yellow, green, cyan, blue, magenta, and grey) and density levels of "dark" and "light" for each color. The user selects a color that is closest to the non-highlight color, and then presses a button corresponding to the selected color.

Likewise, the user's selection detecting section 81 displays a message "Please select the color for characters to be highlighted from the following colors" on the liquid display of the human interface 12. Fourteen colors to be selected are displayed in the shape of colored buttons: seven colors (red, yellow, green, cyan, blue, magenta, and grey) and density levels of "dark" and "light" for each color. The user selects a color sufficiently close to the highlight color, and then presses a button corresponding to the selected color.

At step S1, the image obtaining section 51 obtains the image data. At step S2, the region extracting section 52 extracts a character region and an image region, separately, from the image read from the document.

At step S12, the character color determining section 82 checks the R, G, and B values in the character region extracted at S2 to determine whether the extracted character region has a non-highlight color, highlight color, or other colors.

More specifically, the character color determining section 82 refers to the table 90 to find the L value, "a" value, and "b" value of the non-highlight color specified by the user at S11. If the color of the character region extracted at S2 is sufficiently close to one of the colors in the table 90, then it is determined that the extracted characters have the non-highlight color.

Likewise, the character color determining section 82 refers to the table 90 to find the L value, "a" value, and "b" value of the highlight color specified by the user at S11. If the color of the character region extracted at S2 is sufficiently close to one of the colors in the table 90, then it is determined that the extracted characters have the highlight color.

If the color of characters in the character region extracted at S2 is neither sufficiently close to the non-highlight color specified by the user at S11 nor sufficiently close to the highlight color specified by the user at S11, then it is determined that the extracted characters have other color.

At step S13, the method selecting 83 displays the method for highlight process and the method for de-highlight process to the user, prompting the user to select one of the methods for each process.

For example, the following is displayed on the liquid display screen of the human interface 12, prompting the user to touch his selection.

Method for highlighting:

    1. Increase the density of characters
    2. Bold the characters
    3. Increase the size of characters

Likewise, the following is displayed on the liquid crystal display (LCD) screen of the human interface 12, prompting the user to touch his selection.

Method for de-highlighting:

    1. Decrease the density of characters
    2. Narrow the characters
    3. Reduce the size of characters

The method selecting 83 confirms the method for highlight process and the method for de-highlight process selected by the user, and stores the methods into the RAM 21 or HDD 13.

At step S14, the highlighting section 84 performs the highlight process selected at S13 on the characters in the character region identified as a highlight color region at S2.

At step S15, the highlighting section 84 performs the de-highlight process selected at S13 on the characters in the character region identified as a non-highlight color region at S2.

The image generating section 56 then generates a color reduced image at S6, and the printer 30 prints the color reduced image on the recording medium using toner at S7.

**{Effects of Second Embodiment}**

The second embodiment provides the following effects in addition to those of the first embodiment.

In converting the standard color image into a reduced color image, the user specifies the highlight color and non-highlight color, and then selects the method for highlight process and the method for de-highlight process. This enables the user to produce what he actually wants to produce.

**{Modification}**

The present invention is not limited to the above embodiments and may be modified in a variety of ways as follows:

The first and second embodiments have been described in terms of a digital multi function peripheral, but the invention is not limited to this. The invention may also be applied to digital monochrome multi function peripherals, color printers, monochrome printers, facsimile machines, and multifunction peripherals.

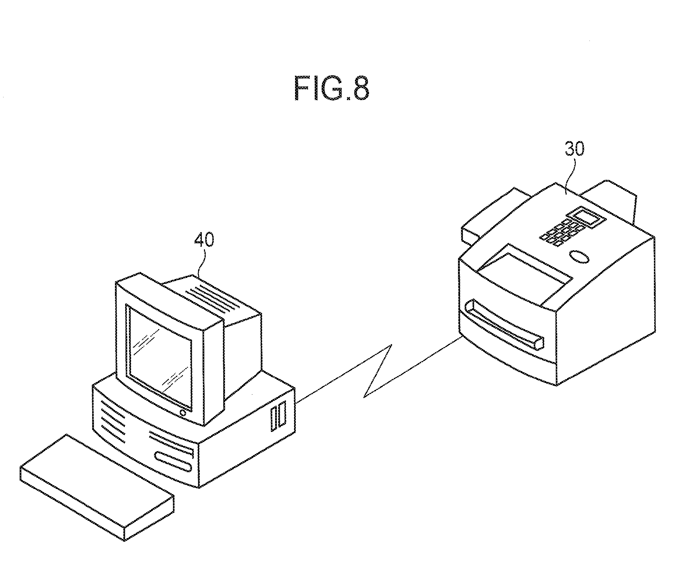

Fig. 8 illustrates an exemplary configuration of an image forming system according to the invention. The first and second embodiments have been described with respect to a digital color multi function peripheral that incorporates a printer 30. The invention may also be configured as an image forming system in which a PC 40 serves as an image processing apparatus 10 and the printer 30 serves as an image forming apparatus. Applying the present invention to an image forming system incorporating a monochrome printer in the form of the printer 30 will maintain the readability of the characters highlighted in color and reducing the overall consumption of toner.

At S13 shown in Fig. 7 of the second Embodiment, the method selecting section 83 has been described as displaying the list of the methods for highlighting and de-highlighting characters to the user via the human interface 12, and prompts the user to select one of the methods. Alternatively, sample images resulting from the highlight process and de-highlight process may be displayed on the human interface 12, thereby facilitating the user's selection.

The invention being thus described, it will be obvious that the same may be varied in many ways. Such variations are not to be regarded as a departure from the spirit and scope of the invention, and all such modifications as would be obvious to one skilled in the art intended to be included within the scope of the following claims.

**Claims**

1. An image processing apparatus, comprising:

    an image obtaining section (51) configured to receive a color image;
    a region extracting section (52) configured to extract a character region from the color image;
    a character color determining section (53) configured to determine whether the characters in the extracted character region have a non-highlight color or a color different from the non-highlight color;
    a highlighting section (54) configured to perform a highlight process on the characters in the extracted character region if the character color determining section (53) determines that the characters in the extracted character region have the color different from the non-highlight color;
    a de-highlighting section (55) configured to perform a de-highlight process on the characters in the extracted character region if the character color determining section (53) determines that the characters in the extracted character region have the non-highlight color;
    an image generating section (56) configured to produce a color-reduced image in which a number of colors has been reduced as a result of either the highlight process or the de-highlight process performed on the extracted character region; and
    a transmitting section (56a) configured to transmit the color-reduced image to an external apparatus.

2. The image processing apparatus according to claim 1, wherein the color different from the non-highlight color is a highlight color.

3. The image processing apparatus according to claim 1, wherein the image obtaining section (51) includes an image reading section (11) that reads the color image from an original document.

4. The image processing apparatus according to claim 1, wherein the image obtaining section (51) includes an input port (14) through which the color image is received from an external apparatus.

5. The image processing apparatus according to claim 1, wherein the character color determining section (53) determines that the non-highlight color is black and the highlight color is a non-black color.

6. The image processing apparatus according to claim 2, wherein the highlighting section (54) converts the characters having the highlight color to characters having a higher color density.

7. The image processing apparatus according to claim 2, wherein the highlighting section (54) converts the characters having the highlight color to characters in bold.

8. The image processing apparatus according to claim 2, wherein the highlighting section (54) converts the characters having the highlight color to characters having a larger size.

9. The image processing apparatus according to claim 6, wherein the de-highlighting section (55) converts the characters having the non-highlight color to characters having a lower density.

10. The image processing apparatus according to claim 1, wherein the non-highlighting section (55) converts the characters having the non-highlight color to characters having narrower lines.

11. The image processing apparatus according to claim 1, wherein the non-highlighting section (55) converts the characters having the non-highlight color to characters having a smaller size.

12. The image processing apparatus according to claim 2 further comprising:

    a user's selection detecting section (81) through which the user inputs his selection;
    wherein the character color determining section (53) is configured to determine based on the user's selected color whether the characters in the extracted region have the non-highlight color or the highlight color.

13. The image processing apparatus according to claim 2 further comprising:

    a user's selection detecting section (81) through which the user inputs his selection of color;

wherein the highlighting section (54) performs the highlight process on the characters having the highlight color in accordance with the selection of color.

14. The image processing apparatus according to claim 1 further comprising:

a user's selection detecting section (81) through which the user inputs his selection;
wherein the de-highlighting section (55) performs the de-highlight process on the characters having the non-highlight color in accordance with the selection.

15. An image forming system incorporating the image processing apparatus according to claim 1; and
an image forming apparatus that receives the color-reduced image from the transmitting section (56a) of the image processing apparatus and develops the color reduced image with a developer material and prints on a recording medium.

# FIG.1

SCANNER ~11

CONTROLLER ~20

RAM ~21

ROM ~22

CPU ~23

~15

HUMAN INTERFACE ~12

HDD ~13

EXTERNAL INTERFACE ~14

PC ~40

PRINTER ~30

~10

# FIG.2

```
                    ┌─────────────────────────┐⌇51
                    │ IMAGE  OBTAINING         │
                    │ SECTION                  │
                    │                          │
                    │  ┌──────┐⌇11   ┌────┐⌇14 │
                    │  └──────┘       └────┘    │
                    └─────────────┬────────────┘
                                  │
                                  ▼
                    ┌─────────────────────────┐⌇52
                    │ REGION  EXTRACTING       │
                    │ SECTION                  │
                    └─────────────┬────────────┘
                                  │
                                  ▼
                    ┌─────────────────────────┐⌇53
                    │ CHARACTER  COLOR         │──────────────┐
                    │ DETERMINING              │              │
                    │ SECTION                  │              ▼
                    └─────────────┬────────────┘    ┌──────────────────────┐⌇55
                                  │                 │ DE-HIGHLIGHTING       │
                                  ▼                 │ SECTION               │
                    ┌─────────────────────────┐⌇54  └──────────┬───────────┘
                    │ HIGHLIGHTING            │                │
                    │ SECTION                  │                │
                    └─────────────┬────────────┘                │
                                  │                             │
                                  ▼                             │
                    ┌─────────────────────────┐⌇56             │
                    │ IMAGE  GENERATING        │◄──────────────┘
                    │ SECTION                  │
                    │  ┌──────────────────┐    │
                    │  │ TRANSMITTER      │    │
                    │  └──────────────────┘    │
                    └─────────────┬────────────┘
                      56a         │
                                  ▼
                    ┌─────────────────────────┐⌇57
                    │ IMAGE  FORMING           │
                    │ SECTION                  │
                    └─────────────────────────┘
```

# FIG.3

START

↓ S1

OBTAIN IMAGE

↓ S2

EXTRACT CHARACTER REGION AND IMAGE REGION

↓ S3

DETERMINE COLOR OF CHARACTERS IN CHARACTER REGION

↓ S4

PERFORM HIGHLIGHT PROCESS ON CHARACTERS IN HIGHLIGHT COLOR CHARACTER REGION

↓ S5

PERFORM DE-HIGHLIGHT PROCESS ON CHARACTERS IN NON-HIGHLIGHT COLOR CHARACTER REGION

↓ S6

SYNTHESIZE COLOR REDUCED IMAGE

↓ S7

PRINT IMAGE

↓

END

## FIG.4A

60

IMPORTANT

DEADLINE MAY 20$^{TH}$

(NLT) — 61

REMARK: BRING YOUR
OWN WRITING — 62
INSTRUMENT

## FIG.4B

70

IMPORTANT

DEADLINE MAY 20$^{TH}$

(NLT) — 71    73

REMARK: BRING YOUR
OWN WRITING — 72
INSTRUMENT    74

# FIG.5

```
                              ~51
┌──────────────────────────┐
│  IMAGE  OBTAINING        │
│  SECTION                 │
│                          │
│  ┌─────┐~11  ┌─────┐~14  │
│  └─────┘     └─────┘      │
└──────────────────────────┘
             │
             ▼
                              ~52
┌──────────────────────────┐
│  REGION  EXTRACTING      │
│  SECTION                 │
└──────────────────────────┘
             │
             ▼
                              ~82
┌──────────────────────────┐
│  CHARACTER  COLOR        │◄──────────────┐
│  DETERMINING             │               │
│  SECTION                 │               │
└──────────────────────────┘        ┌──────────────────────┐
             │                       │              ~81     │
             ▼                       │  USER' SELECTION     │
                              ~83    │  DETECTING SECTION   │
┌──────────────────────────┐        └──────────────────────┘
│  METHOD  SELECTING       │◄──────────────┘
│  SECTION                 │──────────────────┐
└──────────────────────────┘                  │
             │                                 ▼
             ▼                                         ~85
                              ~84    ┌──────────────────────┐
┌──────────────────────────┐        │  DE-HIGHLIGHTING     │
│  HIGHLIGHTING            │        │  SECTION             │
│  SECTION                 │        └──────────────────────┘
└──────────────────────────┘                  │
             │                                 │
             ▼                                 │
                              ~56              │
┌──────────────────────────┐                  │
│  IMAGE  GENERATING       │◄─────────────────┘
│  SECTION                 │
│  ┌──────────────┐        │
│  │ TRANSMITTER  │        │
│  └──────────────┘        │
└──────────────────────────┘
     56a     │
             ▼
                              ~57
┌──────────────────────────┐
│  IMAGE  FORMING          │
│  SECTION                 │
└──────────────────────────┘
```

# FIG.6

90

| COLOR | LIGHT | | | DARK | | |
|---|---|---|---|---|---|---|
| | L | a | b | L | a | b |
| RED | 74 | 39 | 17 | 57 | 75 | 52 |
| YELLOW | 98 | -10 | 49 | 98 | -15 | 87 |
| GREEN | 92 | -46 | 39 | 88 | -75 | 74 |
| CYAN | 94 | -31 | -10 | 91 | -48 | -14 |
| BLUE | 67 | 19 | -51 | 36 | 55 | -101 |
| MAGENTA | 77 | 50 | -35 | 62 | 88 | -57 |
| GREY | 63 | 0 | 0 | 21 | 0 | 0 |

# FIG.7

```
          ┌─────────┐
          │  START  │
          └─────────┘
               │
               ▼                    ～S11
   ┌─────────────────────────────┐
   │ INPUT NON-HIGHLIGHT COLOR   │
   │ AND HIGHLIGHT COLOR         │
   └─────────────────────────────┘
               │
               ▼                    ～S1
   ┌─────────────────────────────┐
   │        OBTAIN IMAGE         │
   └─────────────────────────────┘
               │
               ▼                    ～S2
   ┌─────────────────────────────┐
   │     EXTRACT CHARACTER       │
   │  REGION AND IMAGE REGION    │
   └─────────────────────────────┘
               │
               ▼                    ～S12
   ┌─────────────────────────────┐
   │   DETERMINE COLOR OF        │
   │ CHARACTERS IN CHARACTER     │
   │ REGION BASED ON INPUTTED    │
   │ COLOR AT S11                │
   └─────────────────────────────┘
               │
               ▼                    ～S13
   ┌─────────────────────────────┐
   │ SELECT HIGHLIGHT PROCESS    │
   │ AND DE-HIGHLIGHT PROCESS    │
   └─────────────────────────────┘
               │
               ▼                    ～S14
   ┌─────────────────────────────┐
   │ PERFORM HIGHLIGHT           │
   │ PROCESS ON HIGHLIGHT        │
   │ COLOR CHARACTER REGION      │
   └─────────────────────────────┘
               │
               ▼                    ～S15
   ┌─────────────────────────────┐
   │ PERFORM DE-HIGHLIGHT        │
   │ PROCESS ON NON-HIGHLIGHT    │
   │ COLOR CHARACTER REGION      │
   └─────────────────────────────┘
               │
               ▼                    ～S6
   ┌─────────────────────────────┐
   │ SYNTHESIZE COLOR REDUCED    │
   │ IMAGE                       │
   └─────────────────────────────┘
               │
               ▼                    ～S7
   ┌─────────────────────────────┐
   │        PRINT IMAGE          │
   └─────────────────────────────┘
               │
               ▼
          ┌─────────┐
          │   END   │
          └─────────┘
```

# FIG.8

Europäisches
Patentamt

European
Patent Office

Office européen
des brevets

## EUROPEAN SEARCH REPORT

Application Number

EP 11 18 0509

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/180164 A1 (MIYAGI NORIKO [JP]) 16 July 2009 (2009-07-16) * the whole document * ----- | 1-15 | INV. H04N1/40 |
| A | EP 1 871 088 A2 (CANON KK [JP]) 26 December 2007 (2007-12-26) * abstract; figures 11,16 * ----- | 1 | |
| A | EP 2 023 598 A1 (RICOH KK [JP]) 11 February 2009 (2009-02-11) * paragraphs [0004] - [0007] * ----- | 1 | |
| A | EP 0 186 746 A2 (CASIO COMPUTER CO LTD [JP]) 9 July 1986 (1986-07-09) * page 1 * ----- | 7,8 | |

TECHNICAL FIELDS
SEARCHED (IPC)

H04N

The present search report has been drawn up for all claims

| Place of search | Date of completion of the search | Examiner |
|---|---|---|
| Berlin | 15 December 2011 | Kassow, Harald |

EPO FORM 1503 03.82 (P04C01)

**ANNEX TO THE EUROPEAN SEARCH REPORT
ON EUROPEAN PATENT APPLICATION NO.**

EP 11 18 0509

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2011

| Patent document cited in search report | | Publication date | Patent family member(s) | | Publication date |
|---|---|---|---|---|---|
| US 2009180164 | A1 | 16-07-2009 | JP 2009171093 A<br>US 2009180164 A1 | | 30-07-2009<br>16-07-2009 |
| EP 1871088 | A2 | 26-12-2007 | CN 101094306 A<br>EP 1871088 A2<br>JP 2008005317 A<br>US 2007297668 A1 | | 26-12-2007<br>26-12-2007<br>10-01-2008<br>27-12-2007 |
| EP 2023598 | A1 | 11-02-2009 | CN 101360180 A<br>EP 2023598 A1<br>JP 2009037283 A<br>US 2009034002 A1 | | 04-02-2009<br>11-02-2009<br>19-02-2009<br>05-02-2009 |
| EP 0186746 | A2 | 09-07-1986 | DE 3581072 D1<br>EP 0186746 A2<br>JP 7051364 B<br>JP 61158471 A<br>US 4836712 A | | 07-02-1991<br>09-07-1986<br>05-06-1995<br>18-07-1986<br>06-06-1989 |

EPO FORM P0459

For more details about this annex : see Official Journal of the European Patent Office, No. 12/82